# EUROPEAN PATENT APPLICATION

(11) **EP 3 184 808 A1**
(43) Date of publication of application: **28.06.2017**
(21) Application number: 15202488.1
(22) Date of filing: 23.12.2015
(51) Int. Cl.: F03B 13/26, F03B 15/00

(54) **A HYDROELECTRIC TURBINE CONTROL SYSTEM AND METHOD**

(71) Applicant: Openhydro IP Limited, Dublin 2 (IE)
(72) Inventor: DOYLE, Tom, Drumcondra Dublin 9 (IE); HARNETT, Kevin, Dundrum Dublin 16 (IE); CARLISLE, Andrew, Belfast BT8 7YT (GB)
(74) Representative: O'Neill, Brian

(57) **Abstract**

The present invention is concerned with a hydroelectric control system and method, which is intended to provide physical and/or electrical protection to the turbine during significantly elevated fluid flow velocities such as may occur during an extreme event such as a storm or the like, by switching the turbine from operating as a generator to operating as a motor in order to actively drive a rotor of the turbine in order to generate a thrust which will counteract the axial thrust applied by the flow of fluid across the rotor.

## Description

### Field of the invention

The present invention is concerned with a hydroelectric turbine control system and method, and in particular a control system and method which is intended to protect a hydroelectric turbine from damage during extreme events such as abnormal tidal surges as may occur during a severe storm or the like.

### Background of the invention

Renewable energy has seen enormous advances in recent years, with many projects being developed around solar energy, wind energy, and tidal power. Of these alternative forms of energy, tidal power is arguably the most attractive, given that tidal flows are entirely predictable and constant, unlike wind or solar energy which are relatively intermittent and therefore less dependable.

However, harnessing tidal energy does provide its own challenges, in particular with respect to the installation and maintenance of tidal power generators, for example hydroelectric turbines, which by the very nature of the operation of same must be located in relatively fast flowing tidal currents, and more than likely located on the seabed. One form of installation employs a "gravity base" on which a turbine is mounted, the gravity base utilising the combined weight of the base and turbine, pressing downwardly into the seabed via a plurality of legs, in order to maintain the position and stability of the turbine system without requiring piling or other complex fixing mechanisms.

However, in order to provide sufficient stability the weight of the base and turbine must be significant, and consideration must also be given to withstanding extreme tidal events which, however, generally occur very infrequently. As a result the various components of the system are essentially over engineered for normal operating conditions. Thus the turbine and associated base are large and cumbersome components, and require significant heavy lifting and transport equipment in order to achieve deployment and retrieval for maintenance purposes. The use of such heavy lifting equipment is normally a hazardous undertaking, and is rendered even more dangerous when this equipment is operated at sea under difficult and unsteady conditions. Furthermore, the over engineering of system components, for example ensuring that the blades as one of the components more susceptible to damage due to the relatively narrow dimensions and the full exposure to the tidal flow, can result in the inefficient operation of the turbine during normal, non extreme, conditions and as a result is an undesirable arrangement.

It is therefore an object of the present invention to address the above mentioned issue.

### Summary of the invention

According to a first aspect of the present invention there is provided a hydroelectric turbine control method, the turbine comprising a rotor and a generator operable to generate power in response to rotation of the rotor, the method comprising the steps of:
monitoring one or more operating parameters of the turbine which are indicative of the speed of the rotor or the velocity of the fluid driving the rotor; and
operating the generator as a motor to drive the rotor when the speed exceeds a threshold value, in order to reduce the thrust on the rotor as generated by the fluid flow.

Preferably, the method comprises, in the step of monitoring one or more operating parameter of the turbine, monitoring the output voltage of the generator.

Preferably, the method comprises, in the step of monitoring one or more operating parameter of the turbine, monitoring the torque produced by the rotor.

Preferably, the method comprises, in the step of monitoring one or more operating parameter of the turbine, monitoring the tip speed of blades of the rotor.

Preferably, the method comprises, in the step of monitoring one or more operating parameter of the turbine, monitoring the velocity of fluid driving the rotor.

Preferably, the method comprises the step of controlling the electrical power supplied to the generator such as to maintain the overall thrust on the rotor within a predetermined range.

Preferably, the method comprises the step of supplying electrical power to the generator in order to operate the generator as a motor.

Preferably, the method comprises supplying electrical power to the generator from a local power supply that is rechargeable by the generator.

Preferably, the method comprises operating the generator as a motor for a fixed period of time.

Preferably, the method comprises the step of monitoring the thrust on the rotor; and ceasing to operate the generator as a motor when the thrust on the rotor drops below a threshold value.

According to a second aspect of the present invention there is provided a hydroelectric turbine system comprising a rotor; a generator operable to generate power in response to the rotor being driven by a fluid flow; a control system operable to monitor one or more operating parameters of the turbine which are indicative of the speed of the rotor or the velocity of the fluid flow, the control system being further operable to facilitate the supply of power to the generator to operate as a motor when the speed or velocity exceeds a threshold value in order to reduce the thrust on the rotor generated by the fluid flow.

Preferably, the system comprises a velocity sensor operable to monitor the velocity of the fluid flowing past the rotor and to send a signal to the control system when the fluid velocity drops below a threshold value.

Preferably, the system comprises a thrust sensor operable to monitor the thrust on the rotor and to send a signal to the control system when the thrust or fluid velocity drops below a threshold value.

### Brief description of the drawings

The present invention will now be described with reference to the accompanying drawings, in which;
Figure 1 illustrates a perspective view of a hydroelectric turbine incorporating a control system according to the present invention, including a schematic representation of the velocity of a tidal flow by which a rotor of the turbine is driven;
Figure 2 illustrates the hydroelectric turbine installation of Figure 1, in which the velocity of the tidal flow has increased to a threshold level beyond which damage is likely; and
Figure 3 illustrates the hydroelectric turbine installation of Figure 1, in which the control system of the invention has been activated in order to counteract the thrust imposed on the turbine as a result of the extreme tidal flow; and

### Detailed description of the drawings

Referring now to the accompanying drawings there is illustrated a hydroelectric turbine, generally indicated as 10, which incorporates a control system (not shown) operable to provide physical protection to the turbine 10 during periods of extreme tidal velocity, for example as may be experienced during an extreme storm event or the like.

The hydroelectric turbine 10 comprises a housing 12 which incorporates a stator (not shown), and a rotor 14 mounted for rotation within the housing 12, the rotor 14 comprising a circular array of blades 16 through which, in use, the tidal flow of water passes in order to effect rotation of the rotor 14. The turbine 10 further comprises a generator (not shown) having cooperating components located on both the stator and the rotor 14, and which, through relative motion as the rotor 14 is forced to undergo rotation in response to the tidal flow of water, results in the generation of electricity as is well known in the art. No further description of the generator components and their operation are thus deemed necessary.

The hydroelectric turbine 10 is designed to operate in a bi-directional manner in order to be capable of extracting power from the tidal flow of water regardless of the direction in which the tide is flowing, although it will be appreciated that the control system and method of the present invention, as described in detail hereinafter, may be employed in a unidirectional turbine (not shown) or the like. It will also be appreciated that the design of the turbine 10 may be of any other suitable form, once incorporating a rotor or functionally alternative rotating component designed to be driven by a tidal or other flow of water whose velocity may change at different times or in response to different environmental conditions.

In use the hydroelectric turbine 10 is located in a body of water subjected to variations in the velocity of flow, in particular a body of water subjected to tidal flows. The turbine 10 is preferably located on the seabed at a suitable site, and maintained in position by any suitable means, for example by mounting to a gravity base (not shown) or the like which then sits on the seabed. The turbine 10 is preferably aligned such that an axis of rotation of the rotor 14 is substantially aligned with the direction of the prevailing tidal flow, in order to facilitate maximum power extraction.

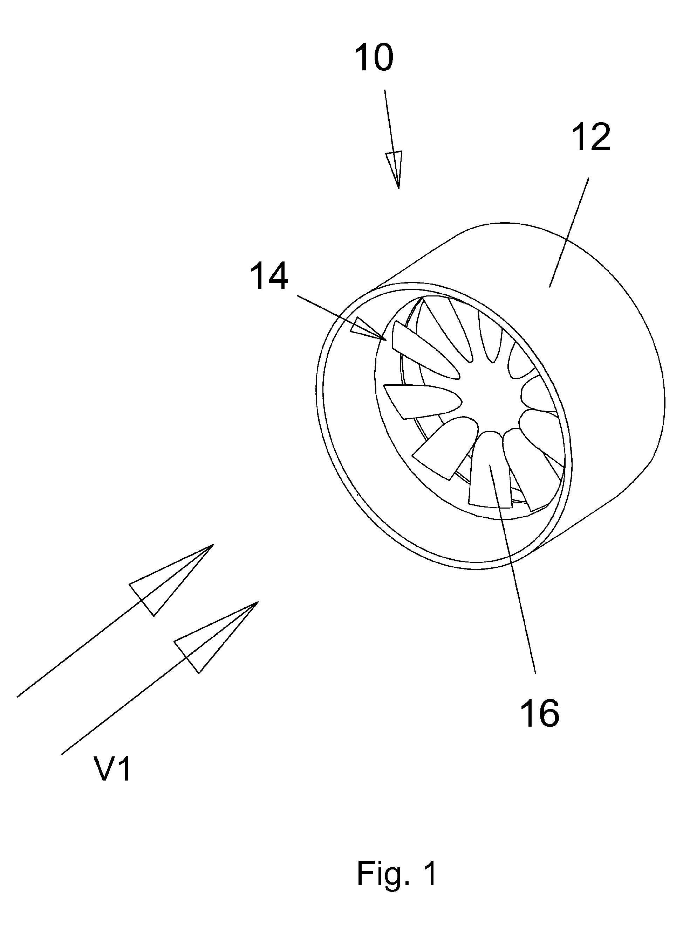

In use the tidal flow of water will be driven through the rotor 14, the housing 12 preferably being shaped and dimensioned to generate a funnel effect accelerating the water across the rotor 14, which then spins relative to the housing 12 in order to generate electricity by means of the associated generator components. The velocity of a normal tidal flow is illustrated schematically as V1 in Figure 1. This normal tidal velocity V1 will result in a tip speed ratio which is within the design parameters of the turbine 10, and will not result in any damage to the physical components of the turbine 10, in particular the blades 16, nor any damage to the electrical or control componentry (not shown) of the turbine 10. During such normal operation the rotor 14 will be subjected to axial trust as a result of the tidal flow of water across the rotor 14, and the turbine 10 may include any suitable bearing system (not shown), such as journals and corresponding plates (not shown), which is designed to bear this axial loading.

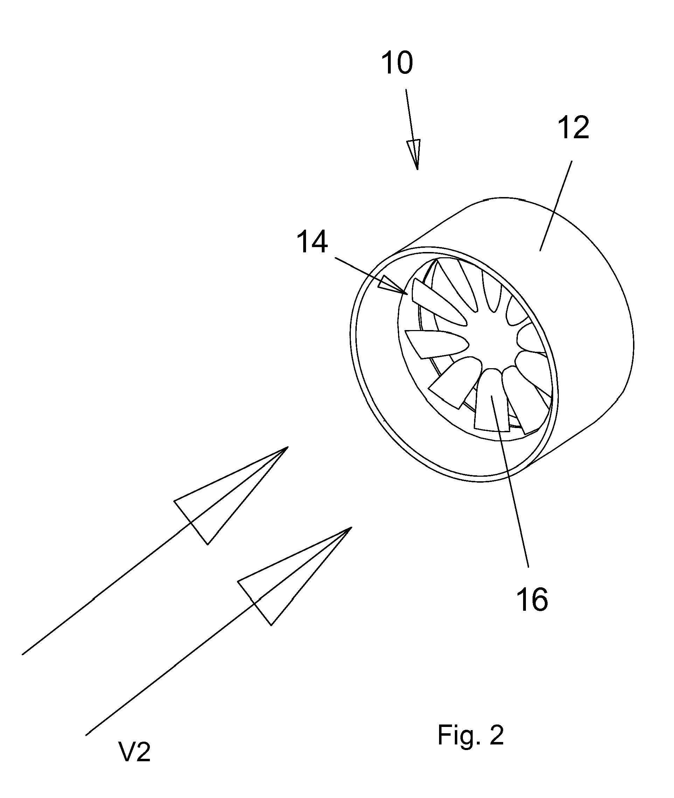

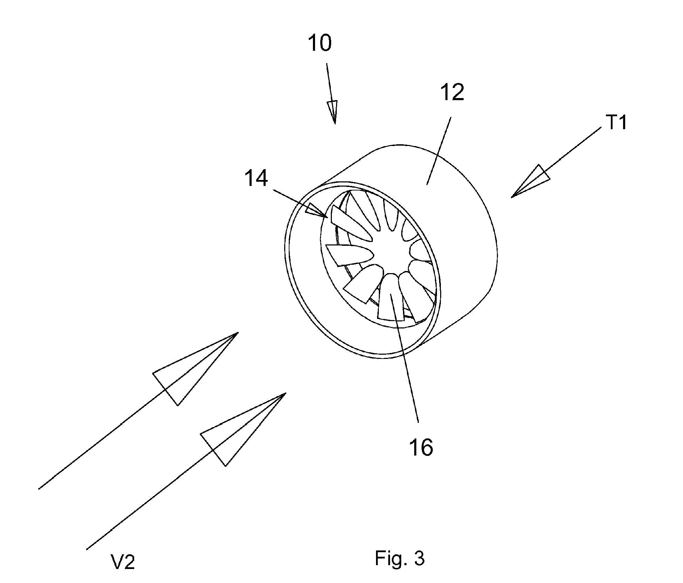

However referring to Figures 2, in the event of an extreme tidal event the tidal velocity can significantly increase to a velocity V2 as illustrated in Figure 2 which will result in unacceptable levels of thrust on the rotor 14 and extremely high tip speed ratios which may be problematic from an electrical generation capability and may ultimately result in both physical and electrical damage to the turbine 10. In order to provide a level of protection to the turbine 10 during such extreme tidal events, the turbine 10 incorporates a control system (not shown) which is operable to monitor one or more operating parameters of the turbine 10, for example the torque or power output of the rotor 12, or the voltage being generated by the turbine 10, all of which are indicative of the speed of rotation of the rotor 14. The control system (not shown) is operable, when this speed reaches a threshold value, to switch the operation of the turbine 10 from functioning as a generator to functioning as a motor which is capable, when electrical power is supplied to the turbine 10, to actively drive the rotor 14 as opposed to the rotor 14 being driven by the fluid flow. In order to function as a motor the turbine 10 must be supplied with electrical power, and this may be done from a local power supply (not shown) which may be charged or recharged by the turbine 10 during normal use, or from a remote power supply, or by any other suitable means. In this way the rotor 14 can be driven in order to generate a trust in the direction opposite to that of the tidal flow acting on the rotor 14, illustrated as T1 in Figure 3, thereby counteracting or reducing the axial thrust on the rotor 14. In this way the overall system loads can be significantly reduced, which can facilitate a corresponding cost reduction in the manufacture of the turbine 10, in particular the blades 16 which are subjected to the greatest stresses during such extreme tidal velocities. Similar reductions may also be achieved in the design and manufacture of the stator and surrounding housing 12, and furthermore the base (not shown) or other foundation used to secure the turbine 10 to the seabed or other underwater substrate.

As such extreme flow velocities generally occur over a very short timescale, for example in the order of seconds, the power required to drive the rotor 14 during these events, in order to counteract the forces generated, would be negligible, in particular from a cost perspective, and would therefore preferably be supplied from a local power supply (not shown) which could be in the form of a capacitor charged by the rotor 14 during normal operation. Once the power supply has been exhausted the control system will allow the turbine 10 to return to functioning as a generator, having provided the protection functionality during the short lived extreme tidal event. The local power supply (not shown) may then be recharged by and during normal operation of the turbine 10.

It will therefore be appreciated that the control system and method of the present invention can provide a hydroelectric turbine 10 with an in built level of protection against such extreme events without requiring the turbine 10 to be over engineered to survive such events, which would result in inefficient operation of the turbine 10 during the prevailing normal conditions.

## Claims

1. A hydroelectric turbine control method, the turbine comprising a rotor and a generator operable to generate power in response to rotation of the rotor, the method comprising the steps of:
monitoring one or more operating parameters of the turbine which are indicative of the speed of the rotor or the velocity of the fluid driving the rotor; and
operating the generator as a motor to drive the rotor when the speed or velocity exceeds a threshold value, in order to reduce the thrust on the rotor as generated by the fluid flow.

2. A method according to claim 1 comprising, in the step of monitoring one or more operating parameter of the turbine, monitoring the output voltage of the generator.

3. A method according to claim 1 comprising, in the step of monitoring one or more operating parameter of the turbine, monitoring the torque produced by the rotor.

4. A method according to claim 1 comprising, in the step of monitoring one or more operating parameter of the turbine, monitoring the tip speed of blades of the rotor.

5. A method according to claim 1 comprising, in the step of monitoring one or more operating parameter of the turbine, monitoring the velocity of fluid driving the rotor.

6. A method according to any preceding claim comprising the step of controlling the electrical power supplied to the generator such as to maintain the overall thrust on the rotor within a predetermined range.

7. A method according to any preceding claim comprising the step of supplying electrical power to the generator in order to operate the generator as a motor.

8. A method according to any preceding claim comprising supplying electrical power to the generator from a local power supply that is rechargeable by the generator.

9. A method according to any preceding claim comprising operating the generator as a motor for a fixed period of time.

10. A method according to any preceding claim comprising the step of monitoring the thrust on the rotor; and ceasing to operate the generator as a motor when the thrust on the rotor drops below a threshold value.

11. A hydroelectric turbine system comprising a rotor; a generator operable to generate power in response to the rotor being driven by a fluid flow; a control system operable to monitor one or more operating parameters of the turbine which are indicative of the speed of the rotor or the velocity of the fluid flow, the control system being further operable to facilitate the supply of power to the generator to operate as a motor when the speed or velocity exceeds a threshold value in order to reduce the thrust on the rotor generated by the fluid flow.

12. A hydroelectric turbine system according to claim 11 comprising a velocity sensor operable to monitor the velocity of the fluid flowing past the rotor and to send a signal to the control system when the fluid velocity drops below a threshold value.

13. A hydroelectric turbine system according to claim 11 or 12 comprising a thrust sensor operable to monitor the thrust on the rotor and to send a signal to the control system when the thrust drops or fluid velocity below a threshold value.
